# EUROPEAN PATENT SPECIFICATION

(11) **EP 1 583 885 B1**
(45) Date of publication and mention of the grant of the patent: **08.08.2007**
(21) Application number: 03782713.6
(22) Date of filing: 24.12.2003
(51) Int. Cl.: E21B 19/16, F16D 41/06

(54) **A TOOL FOR GRIPPING A PIPE OR ROD**
WERKZEUG ZUM GREIFEN EINES ROHRES ODER EINER STANGE
OUTIL DESTINE A RETENIR UN TUYAU OU UNE TIGE

(30) Priority: 07.01.2003 GB 0300244
(43) Date of publication of application: 12.10.2005
(73) Proprietor: BSW Limited, Lancaster LA1 5QP (GB)
(72) Inventor: TAYLOR, Richard James, Kendal, Cumbria LA9 4HP (GB)
(74) Representative: Ajello, Michael John
(86) International application number: PCT/GB2003/005677
(87) International publication number: WO 2004/061262

(56) References cited:
- WO-A-01/21933
- US-A- 3 662 867
- US-A- 3 993 177
- US-A- 5 103 950

## Description

THIS INVENTION comprises a tool for gripping a pipe or rod such as a drill pipe to provide rotational contact therewith. Conventionally, such tools are provided in the form of a pair of arcuate jaws which are brought into contact with diametrically opposed regions of the outer surface of a pipe or rod, the jaws containing inwardly directed teeth of a material having greater hardness than that of the pipe or tool to be gripped whereby the teeth can bite into the softer surface of the pipe or rod to prevent slippage of the tool around the latter.

Particularly in subsea applications and others where corrosion readily occurs, it is a disadvantage for the teeth of the tool to form burrs on the pipe surface which tend to corrode more readily than a smooth surface.

It is an object of the present invention to provide a gripping tool which is constructed and operated such that sharp burrs on the surface of the pipe or rod are avoided and wherein any indentations caused by the tool are of a rounded formation thus discouraging subsequent corrosion of the surface.

Patent specification number WO/0121933 discloses a tool for gripping a pipe or rod and comprising at least one arcuate shoe enclosing and retaining a ball cage with a plurality of ramp surfaces over which the balls may run upon relative rotational movement of the arcuate shoe and the pipe or rod thus to provide a wedging action with which the balls become trapped between the ramp surfaces and of the shoe and the surface of the pipe or rod. In WO/0121933 the ramp surfaces are predominantly flat and inclined with respect to a tangent to the pipe or rod to be gripped.

According to the present invention there is provided a tool for gripping a pipe or rod, comprising at least one arcuate shoe adapted to contact the circumferential surface of a pipe or rod to be gripped by the tool, the or each arcuate shoe comprising an arcuate body enclosing and retaining a ball/roller cage and having a plurality of ramp surfaces over which a plurality of balls or rollers retained by the ball/roller cage may run upon relative rotational movement of the shoe and the pipe or rod, thus to cause the balls or rollers to become trapped between the ramp surfaces of the shoe and the surface of the pipe or rod, to grip the surface thereof; characterised in that the ramp surfaces are provided as individual ramps spirally directed relative to a central longitudinal axis of the tool and thus of the pipe or rod to be gripped thereby.

A pair of arcuate shoes may be provided and located so as to lie in diametrically opposed locations with respect to a pipe or rod to be gripped, thus simultaneously to engage diametrically opposed surface regions thereof.

The tool may include a plurality of pairs of arcuate shoes with ramp surfaces directed collectively to cause a pipe or rod to be gripped in opposed directions of rotation of the shoes relative to the pipe or rod.

The or each arcuate shoe may have ramp surfaces inclined in two opposed directions to cause a pipe or rod to be gripped selectively in both directions of rotation of the or each shoe relative to the pipe or rod.

The ball/roller cage of the or each arcuate shoe may be spring biased towards a condition in which the balls or rollers are in a non-gripping relationship with a pipe or rod to be gripped.

Embodiments of the invention will now be described, by way of example only, with reference to the accompanying drawings, in which:-
Fig. 1 illustrates one part of a tool made in accordance with the invention in internal side elevation;
Fig. 2 is an end view thereof;
Fig. 3 is a cross-section of the tool taken on arrows A-A of Fig. 1 showing the tool in a disengaged condition:
Fig. 4 is a view similar to Fig. 3 showing the tool in an engaged condition;
Fig. 5 is a cross-sectional view of the tool taken along arrows B-B of Fig. 1 showing the tool in a dis-engaged condition;
Fig. 6 is a view similar to Fig. 5 showing the tool in an engaged condition;
Fig. 7 is a diagram illustrating the formation of part of the tool.
Fig. 8 is a diagram illustrating the formation of another part of the tool;
and Fig. 9 shows a second embodiment of the invention.

Referring now to the drawings, it will be assumed that in this embodiment the tool is adapted to grip a rod for rotation thereof about its longitudinal axis in both directions selectively.

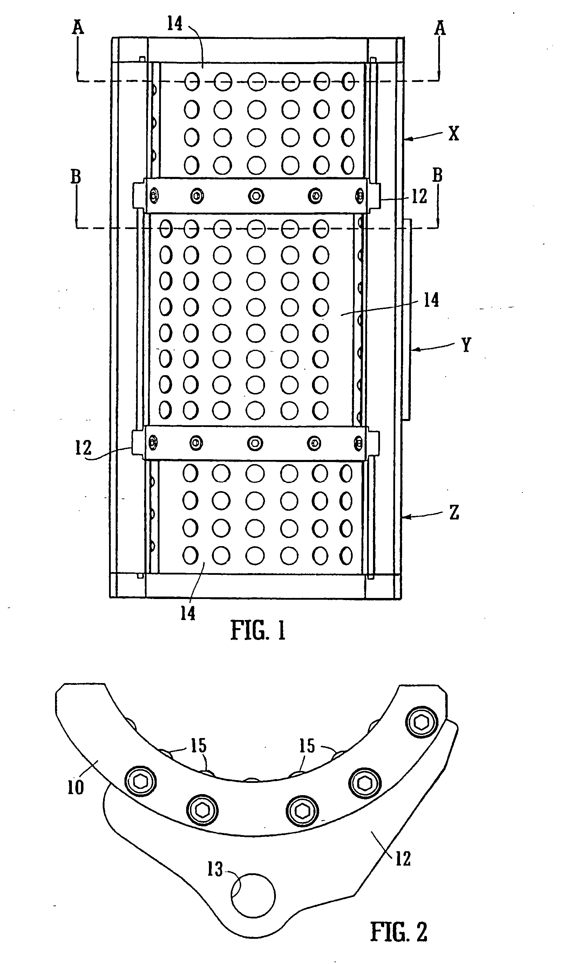

The tool comprises a pair of diametrically opposed arcuate shoes 10 adapted, collectively, to be brought together to grip and partially surround a rod 11. Each shoe 10 comprises three axially spaced sections shown as X, Y and Z in Fig. 1. The shoe also includes an outwardly directed extension arm 12 which may be gripped by a suitable mechanism for rotating the shoe 10 about the central longitudinal axis of the rod 11. An aperture 13 in the extension arm 12 serves for connection of the mechanism to the shoe.

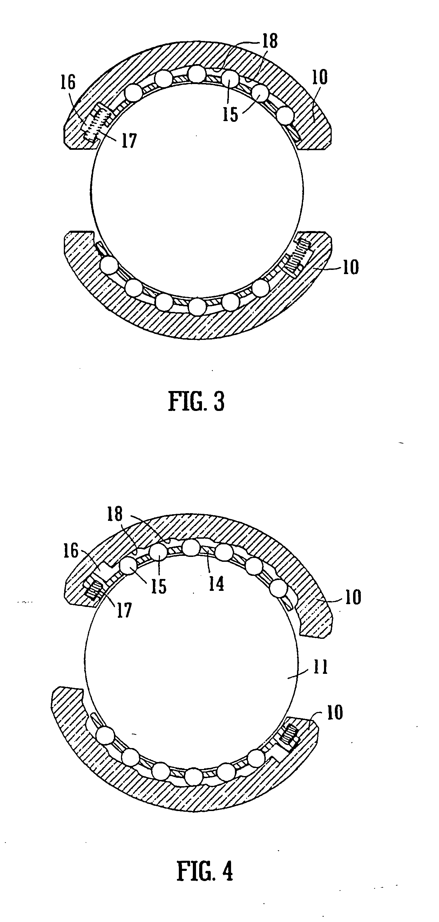

Referring now to Fig. 3, it will be seen that each shoe 10 retains an arcuate ball cage 14 which houses and retains a plurality of balls 15. The ball cage 14 is retained within the shoe and is permitted a degree of relative rotational movement within a slot 16 containing a coil spring 17.

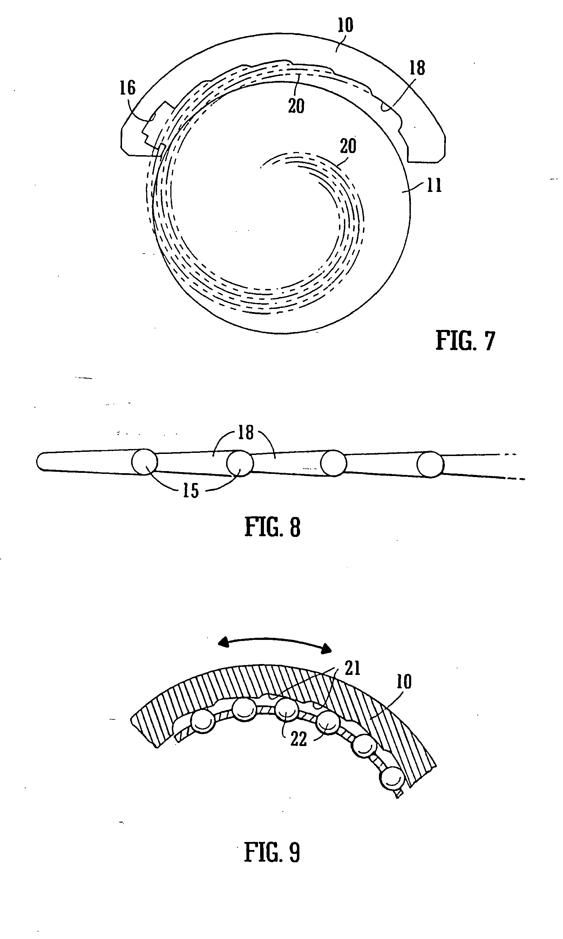

The inner surface of the shoe 10 is formed as a plurality of ramp surfaces 18 one to accommodate each ball 15. The ramp surfaces 18 may be provided as individual ramps of tear-drop shape as illustrated in Fig. 8.

As shown in Fig. 7, each ramp surface 18 is directed spirally with respect to the central longitudinal axis of the rod 11.

The spring 17 biasses the associated ball cage 14 in a direction such that the balls 15 lie at the radially outermost end of their respective ramps 18. Fig. 3 shows this condition in which each shoe 10 is located such that the balls 15 thereof are in contact with the surface of the rod 11 but in a non-gripping condition thereon.

Referring now to Fig. 4, on rotation of the shoes 10 in a clockwise rotation relative to the rod 11 the balls are caused to become trapped between their respective ramp surfaces and the adjacent surfaces of the rod 11 by rolling contact therewith thus to grip same. If the material of the balls 15 is of greater hardness than that of the rod 11, so they will become partially indented in the surface of the latter but only to the extent that a rounded indentation is created by each ball 15, there being no jagged edges at the boundaries of the indentations.

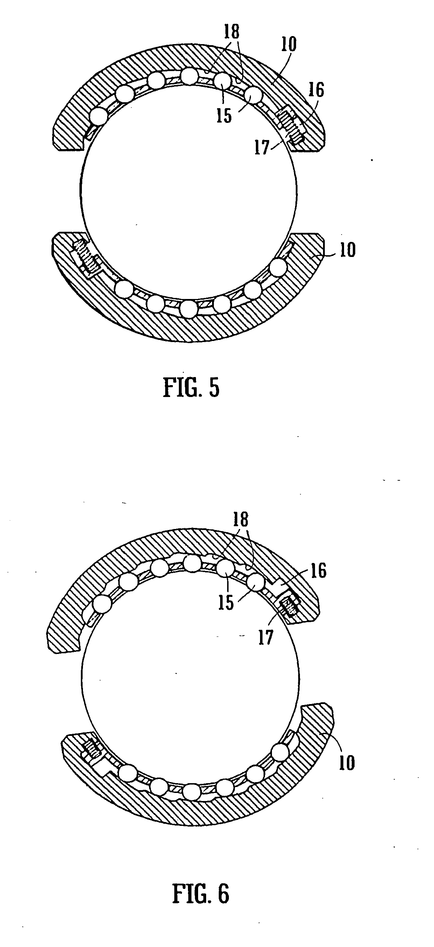

With the tool in a gripping or engaging condition as shown in Fig. 5, the rod 11 may be rotated or axially manoeuvred by the tool.

Since it may be required to rotate the rod 11 in both directions selectively, the ramp surfaces of sections X and Z of the tool are directed as illustrated in Figs. 3 and 4, while in section Y of the tool the ramp surfaces are directed as shown in Figs. 5 and 6. In other words, the ramp surfaces of section Y are opposed rotationally with respect to those of sections X and Z. Thus, from those figures, it can be seen that if the tool is rotated anti-clockwise in relation to the rod 11 so that balls of section y of the tool are forced into gripping engagement with the rod, whereas clockwise rotation causes section x and z to grip the rod.

While the ramp surfaces 18 may be flat, it is preferable that they should take a shape which is spiral with respect to the central longitudinal axis of the rod 11 as illustrated by extension lines 20 in Fig. 7 representing, in each case, a continuation of one of the ramp surfaces 18.

Fig. 8 shows that each ramp surface 18 may be of reducing width from one end to the other, in the shape of a tear drop whose narrower end represents the innermost extremity of the ramp surface at which end the ball 15 reach their maximum engagement with the rod 11.

In an alternative embodiment, as shown in Fig. 9, instead of providing section y having ramp surfaces opposed to those of sections x and z, each ramp surface 21 may be inclined inwardly in two opposed directions such that upon rotation of the tool in either direction the balls 22 will grip the surface of the pipe or rod.

In all embodiments, once the tool is relaxed or rotated in a direction opposite to that placing it into a gripping condition, so the springs 17 will return the ball cage to the condition shown in Figs. 3 and 5, so that the balls will fall back into the outermost extremities of their respective ramp surfaces thus releasing the grip upon the pipe or rod. The tool may then be moved longitudinally with respect to the pipe or rod and engaged once again at a different position thereon.

It will be appreciated that the rounded indentations imposed by the balls 15 are less likely to cause subsequent corrosion on the outer surface of the pipe or rod than with conventional gripping tools the teeth of which cause sharp burrs to be left upon the surface. While the balls 15 are considered to be preferable in most applications, nevertheless in some cases they may be replaced by rollers retained in roller cages within each shoe.

It is not intended to limit the invention to the above examples only, many variations, such as might readily occur to one skilled in the art, being possible. For example, the tool may comprise a pair of shoes only one of which has ramped surfaces, the other simply serving as a support against which the pipe or rod is forced by an opposed shoe having the ramp surfaces.

## Claims

1. A tool for gripping a pipe or rod, comprising at least one arcuate shoe (10) adapted to contact the circumferential surface of a pipe or rod (11) to be gripped by the tool, the or each arcuate shoe (10) comprising an arcuate body enclosing and retaining a ball/roller cage (14) and having a plurality of ramp surfaces (18) over which a plurality of balls or rollers (15) retained by the ball/roller cage (14) may run upon relative rotational movement of the shoe and the pipe or rod, thus to cause the balls or rollers (15) to become trapped between the ramp surfaces (18) of the shoe (10) and the surface of the pipe or rod (11), to grip the surface thereof; **characterised in that** the ramp surfaces (18) are provided as individual ramps spirally directed (20) relative to a central longitudinal axis of the tool and thus of the pipe or rod to be gripped thereby.

2. A tool according to claim 1, wherein a pair of arcuate shoes (10) is provided and located so as to lie in diametrically opposed locations with respect to a pipe or rod (11) to be gripped, thus simultaneously to engage diametrically opposed surface regions thereof.

3. A tool according to claim 1 or claim 2, including a plurality of pairs of arcuate shoes (10) with ramp surfaces (18) directed collectively to cause a pipe or rod to be gripped in opposed directions of rotation of the shoes relative to the pipe or rod.

4. A tool according to claim 1 or claim 2, wherein the or each arcuate shoe (10) has ramp surfaces (18) inclined in two opposed directions to cause a pipe or rod to be gripped selectively in both directions of rotation of the or each shoe relative to the pipe or rod.

5. A tool according to any preceding claim, wherein the ball or roller cage (14) of the or each arcuate shoe (10) is spring biased (17) towards a condition in which the balls or rollers are in a non-gripping relationship with a pipe or rod to be gripped.

6. A tool according to any preceding claim, wherein the ramp surfaces are provided as individual ramps (18) of tear-drop shape.

7. A tool according to claim 6, wherein the ramp surfaces (18) are of reducing width from one end to the other thereof and whose narrower end represents the innermost extremity of the ramp surface at which the associated ball has reached its maximum engagement with the rod.

8. A tool according to claim 1, wherein the tool comprises a pair of diametrically opposed arcuate shoes (10), only one of which has ramped surfaces (18), the other serving as a support against which a pipe or rod (11) is forced by the opposed shoe having ramp surfaces.

9. A tool according to claim 1, wherein the or each arcuate shoe (10) encloses a rollercage (14) having a plurality of rollers (15) retained therein upon a corresponding plurality of ramp surfaces (18).

## Patentansprüche

1. Werkzeug zum Einspannen eines Rohres oder einer Stange, mit wenigstens einer bogenförmigen Backe (10), die dafür ausgebildet ist, die Umfangsoberfläche eines Rohres oder einer Stange (11), das bzw. die durch das Werkzeug einzuspannen ist, zu berühren, wobei die oder jede bogenförmige Backe (10) einen bogenförmigen Körper aufweist, der einen Kugel/Rollen-Käfig (14) umschließt und festhält und mehrere Rampenflächen (18) hat, über die mehrere Kugeln oder Rollen (15), welche durch den Kugel/Rollen-Käfig (14) gehalten werden, bei einer Relativdrehbewegung der Backe und des Rohres oder der Stange laufen können, um so zu bewirken, dass die Kugeln oder Rollen (15) zwischen den Rampenflächen (18) der Backe (10) und der Oberfläche des Rohres oder der Stange (11) eingefangen werden, um die Oberfläche des Rohres oder der Stange einzuspannen, **dadurch gekennzeichnet, dass** die Rampenflächen (18) als individuelle Rampen ausgebildet sind, die relativ zu einer zentralen Längsachse des Werkzeuges und somit des Rohres oder der Stange, das bzw. die durch das Werkzeug einzuspannen ist, spiralförmig gerichtet sind (20).

2. Werkzeug nach Anspruch 1, wobei ein Paar bogenförmige Backen (10) vorgesehen und so angeordnet ist, dass die Backen an diametral entgegengesetzten Stellen in Bezug auf ein einzuspannendes Rohr oder eine einzuspannende Stange (11) angeordnet sind, um so diametral entgegengesetzte Oberflächenbereiche desselben bzw. derselben gleichzeitig zu erfassen.

3. Werkzeug nach Anspruch 1 oder 2, mit mehreren Paaren bogenförmiger Backen (10) mit Rampenflächen (18), die kollektiv gerichtet sind, um zu bewirken, dass ein Rohr oder eine Stange in entgegengesetzten Drehrichtungen der Backen relativ zu dem Rohr oder der Stange eingespannt wird.

4. Werkzeug nach Anspruch 1 oder 2, wobei die oder jede bogenförmige Backe (10) Rampenflächen (18) hat, die in zwei entgegengesetzten Richtungen geneigt sind, um zu bewirken, dass ein Rohr oder eine Stange wahlweise in beiden Drehrichtungen der oder jeder Backe relativ zu dem Rohr oder der Stange eingespannt wird.

5. Werkzeug nach einem der vorhergehenden Ansprüche, wobei der Kugel-oder Rollenkäfig (14) der oder jeder bogenförmigen Backe (10) in Richtung auf einen Zustand federvorgespannt ist (17), in welchem die Kugeln oder Rollen in einer Nichtspannbeziehung mit einem einzuspannenden Rohr oder einer einzuspannenden Stange sind.

6. Werkzeug nach einen der vorhergehenden Ansprüche, wobei die Rampenflächen als individuelle Rampen (18) von Tropfenform ausgebildet sind.

7. Werkzeug nach Anspruch 6, wobei die Rampenflächen (18) von ihrem einen zu ihrem anderen Ende von abnehmender Breite sind und wobei deren schmaleres Ende das innerste Ende der Rampenfläche darstellt, an welchem die zugeordnete Kugel ihren maximalen Eingriff mit der Stange erreicht hat.

8. Werkzeug nach Anspruch 1, wobei das Werkzeug ein Paar diametral entgegengesetzte bogenförmige Backen (10) aufweist, von denen nur eine Rampenflächen (18) hat, wohingegen die andere als ein Träger dient, gegen den ein Rohr oder eine Stange (11) durch die entgegengesetzte Backe, die Rampenflächen hat, gedrückt wird.

9. Werkzeug nach Anspruch 1, wobei die oder jede bogenförmige Backe (10) einen Rollenkäfig (14) umschließt, in welchem mehrere Rollen (15) auf einer entsprechenden Anzahl von Rampenflächen (18) gehalten werden.

## Revendications

1. Outil pour saisir un tuyau ou tige, comprenant au moins une mâchoire arquée (10) adaptée à venir en contact avec la surface circonférentielle d'un tuyau ou d'une tige (11) pour être saisi par l'outil, la ou chaque mâchoire arquée (10) comprenant un corps arqué entourant et retenant une cage à billes/rouleaux (14) et ayant une pluralité de surfaces de rampe (18) sur lesquelles une pluralité de billes ou rouleaux (15) retenus par la cage à billes/rouleaux (14) peut se déplacer par un mouvement rotationnel relatif de la mâchoire et du tuyau ou tige, entraînant ainsi les balles ou rouleaux (15) à être piégés entre les surfaces de rampe (18) de la mâchoire (10) et la surface du tuyau ou tige (11), pour saisir sa surface, **caractérisé en ce que** les surfaces de rampe (18) sont prévues comme rampes individuelles dirigées en spirale (20) par rapport à un axe longitudinal central de l'outil et donc du tuyau ou tige devant ainsi être saisi.

2. Outil selon la revendication 1, dans lequel une paire de mâchoires arquées (10) est prévue et située de façon à s'étendre dans des positions diamétralement opposées par rapport à un tuyau ou tige (11) devant être saisi, pour ainsi venir en prise simultanément avec des régions de surface diamétralement opposées du tuyau ou tige.

3. Outil selon la revendication 1 ou 2, incluant une pluralité de paires de mâchoires arquées (10) avec des surfaces de rampe (18) dirigées collectivement pour amener un tuyau ou tige à être saisi dans des directions opposées de rotation des mâchoires par rapport au tuyau ou tige.

4. Outil selon la revendication 1 ou 2, dans lequel la ou chaque mâchoire arquée (10) a des surfaces de rampe (18) inclinées dans deux directions opposées pour amener un tuyau ou tige à être saisi sélectivement dans les deux directions de rotation de la ou de chaque mâchoire par rapport au tuyau ou tige.

5. Outil selon l'une quelconque des revendications précédentes, dans lequel la cage (14) à billes ou rouleaux de la ou de chaque mâchoire arquée (10) est sollicitée par ressort (17) vers une condition dans laquelle les billes ou rouleaux sont dans une relation non saisissante avec un tuyau ou tige devant être saisi.

6. Outil selon l'une quelconque des revendications précédentes, dans lequel les surfaces de rampe sont prévues comme rampes individuelles (18) en forme de larme.

7. Outil selon la revendication 6, dans lequel les surfaces de rampe (18) ont une largeur se réduisant depuis une extrémité vers l'autre de celles-ci et dont l'extrémité la plus étroite représente l'extrémité la plus interne de la surface de rampe au niveau de laquelle la bille associée à atteint son engagement maximum avec la tige.

8. Outil selon la revendication 1, dans lequel l'outil comprend une paire de mâchoires arquées diamétralement opposée (10), dont seulement une a des surfaces de rampe (18), l'autre servant de support contre lequel un tuyau ou tige (11) est forcé par la mâchoire opposée ayant des surfaces de rampe.

9. Outil selon la revendication 1, dans lequel la ou chaque mâchoire arquée (10) entoure une cage à rouleaux (14) ayant une pluralité de rouleaux (15) retenus à l'intérieur sur une pluralité correspondante de surfaces de rampe (18).
